# EUROPÄISCHE PATENTSCHRIFT

(11) **EP 1 431 536 B1**
(45) Veröffentlichungstag und Bekanntmachung des Hinweises auf die Patenterteilung: **11.05.2005**
(21) Anmeldenummer: 03028355.0
(22) Anmeldetag: 10.12.2003
(51) Int. Cl.: F01N 3/30, F02M 25/07, F01N 3/22, F02D 21/08

(54) **Schallwandler für ein Kraftfahrzeug**
Acoustic transducer for a motor vehicle
Transducteur acoustique pour véhicule à moteur

(30) Priorität: 18.12.2002 DE 10259099
(43) Veröffentlichungstag der Anmeldung: 23.06.2004
(73) Patentinhaber: MAHLE Filtersysteme GmbH, 70376 Stuttgart (DE); Bayerische Motoren Werke Aktiengesellschaft, 80809 München (DE)
(72) Erfinder: Enderich, Andreas, 73734 Esslingen (DE); Griebel, Claus-Otto, 82194 Gröbenzell (DE)
(74) Vertreter: Patentanwalts-Partnerschaft, Rotermund + Pfusch + Bernhard

(56) Entgegenhaltungen:
- DE-A- 4 316 778
- DE-C- 19 747 245
- PATENT ABSTRACTS OF JAPAN vol. 013, no. 455 (M-879), 13. Oktober 1989 (1989-10-13) & JP 01 177446 A (MITSUBISHI HEAVY IND LTD;OTHERS: 01), 13. Juli 1989 (1989-07-13)
- PATENT ABSTRACTS OF JAPAN vol. 010, no. 047 (M-456), 25. Februar 1986 (1986-02-25) & JP 60 198319 A (NIPPON JIDOSHA BUHIN SOGO KENKYUSHO KK), 7. Oktober 1985 (1985-10-07)

## Beschreibung

Die vorliegende Erfindung betrifft einen Schallwandler für ein Kraftfahrzeug mit den Merkmalen des Oberbegriffs des Anspruchs 1.

Ein derartiger Schallwandler ist beispielsweise aus der DE 100 15 697 C1 bekannt und besitzt einen hohlen Übertragungskörper, der mit seinem Eingang zur Auskopplung von Luftschall an eine Abgasanlage einer Brennkraftmaschine des Fahrzeugs kommunizierend angeschlossen ist. Die Abgasanlage dient somit als Schallquelle, an der von der Brennkraftmaschine erzeugter Luftschall ausgekoppelt werden kann. An seinem Ausgang weist der Übertragungskörper eine Kammer auf, die mit einer Membran verschlossen ist. Durch den ausgekoppelten Luftschall kann die Membran zu Schwingungen angeregt werden, so dass die Membran modulierten Luftschall am Ausgang des Übertragungskörpers in einen Motorraum abstrahlt.

Mit Hilfe des Schallwandlers kann somit Luftschall, der von der Brennkraftmaschine erzeugt und in die Abgasanlage eingeleitet wird, ausgekoppelt und in geeigneter Weise moduliert werden. In der Abgasanlage sind regelmäßig Komponenten enthalten, die den von der Brennkraftmaschine kommenden Luftschall beeinflussen. Beispielsweise wirkt ein Katalysator als Dämpfer, während beispielsweise eine Turbine eines Abgasturboladers den Luftschall der Brennkraftmaschine verändert, insbesondere "zerhackt", sowie mit Luftschall überlagert, der vom Abgasturbolader erzeugt wird. Es besteht daher das Interesse, den von der Brennkraftmaschine erzeugten Luftschall möglichst nahe an der Brennkraftmaschine auszukoppeln. Da die Abgasanlage aufgrund der heißen Abgasströmung in der Nähe der Brennkraftmaschine hohen Temperaturen ausgesetzt ist, kann der Übertragungskörper des Schallwandlers nur dann an die heißen Bereiche der Abgasanlage angeschlossen werden, wenn er in geeigneter Weise temperaturbeständig ausgebildet ist, wodurch der Schallwandler relativ teuer ist. Zweckmäßig ist der Übertragungskörper daher aus Metall hergestellt.

Die vorliegende Erfindung beschäftigt sich mit dem Problem, für einen Schallwandler der eingangs genannten Art eine verbesserte Ausführungsform anzugeben, die insbesondere preiswerter herstellbar ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Obertragungskorper nicht direkt, sondern indirekt an die Abgasanlage anzuschließen, in dem der Übertragungskörper mit einer Leitung kommunizierend verbunden wird, die ihrerseits mit der Abgasanlage kommunizierend verbunden ist und die ohnehin an der Brennkraftmaschine schon vorhanden ist. Diese Leitung bildet dabei einen Bestandteil einer unabhängig vom Schallwandler im Fahrzeug bereits vorhandenen Einrichtung, die zur Einleitung von Gas in die Abgasanlage und/oder zur Entnahme von Gas aus der Abgasanlage dient. Da der Übertragungskörper somit nicht mehr direkt an die Abgasanlage angeschlossen ist, ist er geringeren Temperaturen ausgesetzt, so dass es grundsätzlich möglich ist, den Übertragungskörper aus einem weniger hitzebeständigen und somit preiswerteren Material herzustellen.

Von besonderem Vorteil ist eine Ausführungsform, bei der die Leitung, über die der Übertragungskörper mit der Abgasanlage kommuniziert, eine Sekundärluftleitung einer Einrichtung zum Einblasen von Sekundärluft in die Abgasanlage ist. Eine derartige Sekundärluftversorgungseinrichtung wird üblicherweise dazu benutzt, bei einem fetten Betrieb der Brennkraftmaschine über die eingespeiste Luft einen Oxidator in die Abgasanlage einzubringen. Durch die Sekundärlufteinspeisung kann in Verbindung mit einem Fettbetrieb z.B. ein Katalysator besonders schnell auf seine optimale Betriebstemperatur erhitzt werden. Ebenso kann die Sekundärlufteinspeisung für die Regeneration eines Partikelfilters genutzt werden. Durch die erfindungsgemäße Merkmalskombination kann die Sekundärluftleitung zusätzlich zur Auskopplung von Luftschall genutzt werden. Wobei von besonderem Vorteil ist, dass die Sekundärluftleitung üblicherweise relativ nahe an der Brennkraftmaschine, jedenfalls stromauf eines Katalysators bzw. eines Partikelfilters, in die Abgasanlage einmündet. Da durch die Sekundärluftleitung in der Regel kein Abgas strömt, herrschen in der Sekundärluftleitung, auch in der Nähe der Abgasanlage regelmäßig kleinere Temperaturen als in der voll durchströmten Abgasanlage.

Von besonderem Interesse ist eine Weiterbildung, bei der die Sekundärluftleitung zumindest teilweise in einem Motorblock der Brennkraftmaschine verläuft, wobei dann der Übertragungskörper mit seinem Eingang so an diesen Motorblock angeschlossen ist, dass er mit der Sekundärluftleitung kommuniziert. Da der Motorblock in der Regel von einem Motorkühlkreis gekühlt ist, ist auch die Sekundärluftleitung, zumindest in ihrem im Motorblock verlaufenden Abschnitt, gekühlt. Das bedeutet, dass auch in dem Bereich, in dem der Übertragungskörper mit dem Motorblock bzw. mit der Sekundärluftleitung verbunden ist, relativ niedrige Temperaturen herrschen, so dass der Übertragungskörper vollständig aus Kunststoff hergestellt werden kann.

Bei einer anderen Ausführungsform kann die Leitung, über die der Übertragungskörper mit der Abgasanlage kommuniziert, eine Abgasrückführleitung einer Einrichtung zur Rückführung von Abgas aus der Abgasanlage in eine Frischluftanlage der Brennkraftmaschine sein. Eine derartige Abgasrückführungseinrichtung dient bei modernen Brennkraftmaschinen dazu, die Schadstoffemmision und den Kraftstoffverbrauch der Brennkraftmaschine zu reduzieren. Da über die Abgasrückführungsleitung regelmäßig deutlich geringere Massenströme transportiert werden als über die Abgasanlage, herrschen in der Abgasrückführungsleitung in der Regel niedrigere Temperaturen als in der Abgasanlage nahe an der Brennkraftmaschine. Dementsprechend kann auch hier für den Übertragungskörper ein weniger hitzebeständiges und somit preiswerteres Material verwendet werden.

Bei einer bevorzugten Weiterbildung kann an oder in der Abgasrückführleitung ein Abgaskühler angeordnet sein, wobei dann der Übertragungskörper mit seinem Eingang stromab dieses Abgaskühlers, also auf der von der Abgasanlage abgewandten Seite, an die Abgasrückführleitung angeschlossen ist. Das bedeutet, dass der Übertragungskörper am gekühlten Abschnitt der Abgasrückführleitung angebracht ist, so dass es insbesondere möglich ist, den Übertragungskörper vollständig aus Kunststoff herzustellen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder funktional gleiche oder ähnliche Bauteile beziehen.

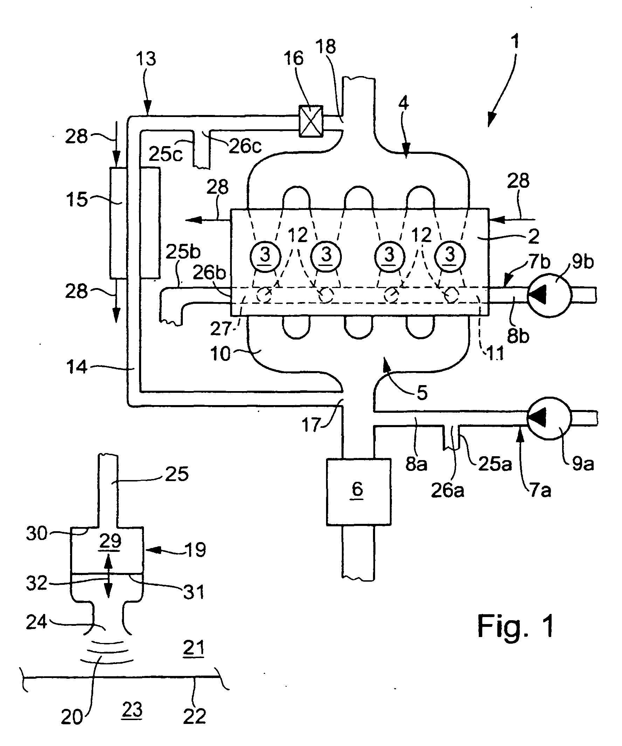

Die einzige Fig. 1 zeigt eine stark vereinfachte Prinzipdarstellung eines nur teilweise dargestellten Fahrzeugs, das mit einem Schallwandler nach der Erfindung ausgestattet ist.

Entsprechend Fig. 1 weist eine Brennkraftmaschine 1 eines im übrigen nicht dargestellten Kraftfahrzeugs, insbesondere eines Personenkraftwagens, einen Motorblock 2 auf, dessen Zylindern 3 über eine Frischluftanlage 4 Frischluft zugeführt wird, während eine Abgasanlage 5 die im Betrieb der Brennkraftmaschine 1 erzeugten Abgase von den Zylindern 3 abführt. Die Abgasanlage 5 kann einen Katalysator 6 enthalten.

Die Brennkraftmaschine 1 kann mit einer Sekundärluftversorgungseinrichtung 7 ausgestattet sein, die eine Sekundärluftleitung 8 aufweist. Diese Sekundärluftleitung 8 ist mit der Abgasanlage 5 verbunden, so dass mit Hilfe der Sekundärluftversorgungseinrichtung 7 Sekundärluft durch die Sekundärluftleitung 8 in die Abgasanlage 5 einblasbar ist. Zu diesem Zweck weist die Sekundärluftversorgungseinrichtung 7 eine Sekundärluftpumpe bzw. ein Sekundärluftgebläse 9 auf, das mit seiner Druckseite an die Sekundärluftleitung 8 angeschlossen ist.

In Fig. 1 sind zwei Varianten für die Sekundärluftversorgungseinrichtung 7 dargestellt, die durch die Buchstaben a und b voneinander unterscheidbar sind. Dementsprechend ist bei der ersten Variante (a) die Sekundärluftleitung 8a der Sekundärluftversorgungseinrichtung 7a stromab eines Abgassammlers 10 und stromauf des Katalysators 6 an die Abgasanlage 5 angeschlossen. Im Unterschied dazu ist bei der zweiten Variante (b) die Sekundärluftleitung 8b mit einem Abschnitt 11 im Inneren des Motorblocks 2 verlegt, d.h. dieser Abschnitt 11 der Sekundärluftleitung 8b ist in den Motorblock 2 integriert. Dementsprechend ist bei der zweiten Variante (b) die Sekundärluftleitung 8b stromauf des Abgassammlers 10, im Inneren des Motorblocks 2 an die Abgasanlage 5 angeschlossen. Die Anschlüsse sind dabei durch gepunktete Kreise symbolisiert und mit 12 bezeichnet.

Zusätzlich oder alternativ kann die Brennkraftmaschine 1 außerdem mit einer Abgasrückführungseinrichtung 13 ausgestattet sein, die eine Abgasrückführleitung 14, einen Abgaskühler 15 und ein Steuerventil 16 aufweist. Die Abgasrückführleitung 14 ist mit ihrem Eintritt 17 an die Abgasanlage 5 und mit ihrem Austritt 18 an die Frischluftanlage 4 angeschlossen. Mit Hilfe der Abgasrückführungseinrichtung 13 können im Betrieb der Brennkraftmaschine 1 Verbrennungsabgase von der Abgasanlage 5 in die Frischluftanlage 4 rückgeführt werden, um dadurch die Schadstoffemission und den Kraftstoffverbrauch der Brennkraftmaschine 1 zu reduzieren. Mit Hilfe des Abgaskühlers 15, der wärmeübertragend mit der Abgasrückführleitung 14 verbunden ist, können die rückgeführten Abgase abgekühlt werden, um dadurch den Massenstrom zu erhöhen. Das Steuerventil 16 wird von einer üblichen, hier nicht gezeigten Motorsteuerung betätigt, um die Rückführrate in Abhängigkeit des Motorbetriebs optimal einstellen zu können.

Erfindungsgemäß ist die Brennkraftmaschine 1 außerdem mit einem Schallwandler 19 ausgestattet, der dazu dient, Luftschall, den die Brennkraftmaschine 1 erzeugt, auszukoppeln, zu modulieren und den modulierten Luftschall in einen Zielraum abzustrahlen. Der Schallwandler 19 weist einen hohlen Übertragungskörper 25 auf, in dem sich Luftschall ausbreiten kann. Die Abstrahlung des modulierten Luftschalls ist in Fig. 1 durch Schallwellenlinien 20 symbolisch dargestellt. Der mit dem modulierten Luftschall beaufschlagte Zielraum kann beispielsweise ein Motorraum 21 des Fahrzeugs sein, in dem die Brennkraftmaschine 1 untergebracht ist. Dieser Motorraum 21 ist über eine Stirnwand 22 von einem Fahrzeuginnenraum 23 getrennt, der ebenfalls ein Zielraum für die Schallbeaufschlagung sein kann. Dementsprechend ist hier ein beispielsweise als Schallabstrahltrichter ausgebildeter Ausgang 24 des Übertragungskörpers 25 in der Nähe der Stirnwand 22 angeordnet und auf den Fahrzeuginnenraum 23 ausgerichtet. Ebenso ist es möglich, den Ausgang 24 direkt an oder in der Stirnwand 22 anzubringen. Desweiteren kann der Übertragungskörper 25 auch so positioniert werden, dass sein Ausgang 24 die Stirnwand 22 durchdringt, so dass der Ausgang 24 im Fahrzeuginnenraum 23 angeordnet ist.

Der Übertragungskörper 25 ist an seinem Eingang 26 an eine Leitung (Sekundärluftleitung 8 oder Abgasrückführleitung 14) einer Einrichtung (Sekundärluftversorgungseinrichtung 7 oder Abgasrückführungseinrichtung 13) angeschlossen, wobei diese Leitung (8 oder 14) ihrerseits an die Abgasanlage 5 angeschlossen ist. In Fig. 1 sind verschiedene Varianten für den erfindungsgemäß vorgeschlagenen indirekten Anschluss des Übertragungskörpers 25 an die Abgasanlage 5 wiedergegebenen, die durch die Buchstaben a, b, c voneinander unterscheidbar sind.

Bei der ersten Variante (a) ist der Übertragungskörper 25a mit seinem Eingang 26a an die Sekundärluftleitung 8a angeschlossen, die stromab des Motorblocks 2 an die Abgasanlage 5 angeschlossen ist. Auf diese Weise kann über die Sekundärluftleitung 8a Luftschall aus der Abgasanlage 5 in den Übertragungskörper 25a gelangen. Beachtenswert ist hierbei, dass der Übertragungskörper 25a mit seinem Eingang 26a stromab des Sekundärluftgebläses 9a, also an dessen Druckseite an die Sekundärluftleitung 8a angeschlossen ist.

Eine Sekundärluftversorgungsanlage 7 ist üblicherweise so ausgebildet, dass sie im deaktivierten Zustand gasdicht ist, so dass kein Abgas aus der Abgasanlage 5 durch die Sekundärluftleitung 8 strömt. Dementsprechend ist der bei der ersten Variante (a) an die Sekundärluftleitung 8a angeschlossene Übertragungskörper 25a keiner direkten Abgasströmung ausgesetzt, so dass am Eingang 26a keine besonders hohen Temperaturen auftreten. Dementsprechend ist es möglich, den Übertragungskörper 25a aus Kunststoff herzustellen. Dabei kann es bei bestimmten Konstellationen erforderlich sein, einen den Eingang 26a aufweisenden Anschlussbereich des Übertragungskörpers 25a nicht aus Kunststoff, sondern z.B. aus Metall herzustellen.

Bei der zweiten Variante (b) ist der Übertragungskörper 25b mit seinem Eingang 26b kommunizierend mit dem in Motorblock 2 verlaufenden Abschnitt 11 der Sekundärluftleitung 8b verbunden. Zweckmäßig ist der Übertragungskörper 25b dazu an den Motorblock 2 angeschlossen, wobei dieser einen Rohrabschnitt 27 enthält, der den Übertragungskörper 25b kommunizierend mit dem im Motorblock 2 verlegten Abschnitt 11 der Sekundärluftleitung 8b verbindet. Da ein derartiger Rohrabschnitt 27 herstellungsbedingt bei einem Motorblock 2 mit integrierter Sekundärluftleitung 8b in der Regel ohnehin vorhanden ist, kann die zweite Variante (b) ohne größeren Aufwand realisiert werden.

Auch hier kann von der Brennkraftmaschine 2 erzeugte Luftschall aus der Abgasanlage 5 über die Sekundärluftleitung 8b bzw. deren Abschnitt 11 in den Übertragungskörper 25b gelangen. Von besonderer Bedeutung ist hierbei, dass der Motorblock 2 und somit der darin integrierte Abschnitt 11 der Sekundärluftleitung 8b mit Hilfe eines Motorkühlkreises 28 gekühlt wird. Dementsprechend herrschen an dem im Motorblock 2 verlaufenden Abschnitt 11 der Sekundärluftleitung 8b relativ niedrige Temperaturen, so dass der Übertragungskörper 25b bis zu seinem Eingang 26b aus Kunststoff hergestellt werden kann.

Bei der in Fig. 1 gezeigten dritten Variante (c) ist der Übertragungskörper 25c mit seinem Eingang 26c an die Abgasrückführleitung 14 angeschlossen. Auf diese Weise kann Luftschall aus der Abgasanlage 5 über die Abgasrückführleitung 14 in den Übertragungskörper 25c gelangen. Da in der Abgasrückführleitung 14 üblicherweise kleinere Volumenströme an Abgas vorliegen als in der Abgasanlage 5, herrschen in der Abgasrückführleitung 14 üblicherweise auch kleinere Temperaturen. Von besonderem Vorteil ist die hier gezeigte Ausführungsform, bei der der Übertragungskörper 25c stromab des Abgaskühlers 15; also zwischen dem Abgaskühler 15 und der Frischluftanlage 4 an die Abgasrückführleitung 14 angeschlossen ist. Der Abgaskühler 15 ist beispielsweise in den Motorkühlkreis 28 eingebunden und bewirkt eine intensive Abkühlung der rückgeführten Abgase. Dementsprechend herrschen in der Abgasrückführleitung 14 stromab des Abgaskühlers 15 relativ niedrige Temperaturen. Auch bei der dritten Variante (c) kann der Übertragungskörper 25c einschließlich oder ausschließlich des den Eingang 26c aufweisenden Anschlussbereichs aus Kunststoff hergestellt sein.

Zur Beeinflussung bzw. zur Modulation des ausgekoppelten Luftschalls enthält der Übertragungskörper 25 eine Kammer 29, in der Luftschall über einen Querschnittssprung 30 eintritt. Zweckmäßig ist die Kammer 29 als Resonator ausgebildet, um bestimmte Frequenzen zu bedämpfen bzw. um andere Frequenzen zu verstärken. Der Übertragungskörper 25 enthält außerdem einen Schwingkörper 31, der durch die Schallbeaufschlagung entsprechend einem Doppelpfeil 32 zu Schwingungen angeregt wird. Dadurch kann dieser Schwingkörper 31 den modulierten Luftschall zum Ausgang 24 des Übertragungskörpers 25 abstrahlen, wo er zum Zielraum (Motorraum 21 und/oder Fahrzeuginnenraum 23) austritt. Zweckmäßig ist der Übertragungskörper 25 im Bereich des Schwingkörper 31 gasdicht ausgebildet, um einen Abgasaustritt bzw. einen Druckverlust durch den Übertragungskörper 25 zu vermeiden. Der Schwingkörper 31 kann als Membran ausgebildet sein.

Durch den erfindungsgemäßen Vorschlag, den Übertragungskörper 25 nicht direkt, sondern indirekt über die Sekundärluftleitung 8 oder die Abgasrückführleitung 14 an die Abgasanlage 5 anzuschließen, ist der Übertragungskörper 25 nur relativ niedrigen Temperaturen ausgesetzt, so dass der Schallwandler 19 nahezu vollständig aus Kunststoff und somit preiswert hergestellt werden kann.

## Patentansprüche

1. Schallwandler an oder in einem Kraftfahrzeug, mit einem hohlen Übertragungskörper (25), der an seinem Eingang (26) zur Auskopplung von Luftschall mit einer Schallquelle (1) des Fahrzeugs kommunizierend verbunden ist und an dessen Ausgang (24) modulierter Luftschall in wenigstens einen oder zu wenigsten einem Zielraum (21, 23) abstrahlbar ist,
**dadurch gekennzeichnet,**
**dass** der Übertragungskörper (25) mit seinem Eingang (26) an eine Leitung (8; 14) kommunizierend angeschlossen ist, die ihrerseits an eine Abgasanlage (5) einer Brennkraftmaschine (1) des Fahrzeugs kommunizierend angeschlossen ist und die ein Bestandteil einer Einrichtung (7; 13) ist, die zur Einleitung von Gas in die Abgasanlage (5) und/oder zur Entnahme von Gas aus der Abgasanlage (5) dient.

2. Schallwandler nach Anspruch 1,
**dadurch gekennzeichnet,**
**dass** die Leitung eine Sekundärluftleitung (8) einer Einrichtung (7) zum Einblasen von Sekundärluft in die Abgasanlage (5) ist.

3. Schallwandler nach Anspruch 2,
**dadurch gekennzeichnet,**
**dass** die Sekundärluftleitung (8b, 11) zumindest teilweise in einen Motorblock (2) der Brennkraftmaschine (1) integriert ist, wobei der Übertragungskörper (25b) mit seinem Eingang (26b) an den Motorblock (2) angeschlossen ist und mit der Sekundärluftleitung (8b, 11) kommuniziert.

4. Schallwandler nach Anspruch 2 oder 3,
**dadurch gekennzeichnet,**
**dass** die Sekundärluftleitung (8) mit einem Sekundärluftgebläse (9) verbunden ist, wobei der Übertragungskörper (25) an der Druckseite des Sekundärluftgebläses (9) an die Sekundärluftleitung (8) angeschlossen ist.

5. Schallwandler nach Anspruch 1,
**dadurch gekennzeichnet,**
**dass** die Leitung eine Abgasrückführleitung (14) einer Einrichtung (13) zur Rückführung von Abgas aus der Abgasanlage (5) in eine Frischluftanlage (4) der Brennkraftmaschine (1) ist.

6. Schallwandler nach Anspruch 5,
**dadurch gekennzeichnet,**
**dass** an oder in der Abgasrückführleitung (14) ein Abgaskühler (15) angeordnet ist und dass der Übertragungskörper (25c) mit seinem Eingang (26c) stromab des Abgaskühlers (15) an die Abgasrückführleitung (14) angeschlossen ist.

7. Schallwandler nach einem der Ansprüche 1 bis 6,
**dadurch gekennzeichnet,**
**dass** der Übertragungskörper (25) einschließlich oder ausschließlich eines den Eingang (26) aufweisenden Anschlussbereichs aus Kunststoff hergestellt ist.

8. Schallwandler nach einem der Ansprüche 1 bis 7,
**dadurch gekennzeichnet,**
**dass** der Übertragungskörper (25) gasdicht ausgebildet ist.

9. Schallwandler nach einem der Ansprüche 1 bis 8,
**dadurch gekennzeichnet,**
**dass** der Übertragungskörper (25) eine Kammer (29) aufweist, die als Resonator ausgebildet ist.

## Claims

1. An acoustic transducer in or on a motor vehicle, having a hollow transmission body (25) which communicates at its inlet (26) with a sound source (1) of the motor vehicle for decoupling airborne sound, and modulated airborne sound can be emitted at its outlet (24) into or toward at least one target space (21, 23),
**characterized in that**
the transmission body (25) communicates at its inlet (26) with a line (8; 14) which in turn communicates with an exhaust system (5) of an internal combustion engine (1) of the motor vehicle and is a part of a system (7; 13) which serves to introduce gas into the exhaust system (5) and/or to remove gas from the exhaust system (5).

2. The acoustic transducer according to Claim 1,
**characterized in that**
the line is a secondary air line (8) of a system (7) for blowing secondary air into the exhaust system (5).

3. The acoustic transducer according to Claim 2,
**characterized in that**
the secondary air line (8b, 11) is at least partially integrated into an engine block (2) of the internal combustion engine (1), whereby the transmission body (25b) is connected at its inlet (26b) to the engine block (2) and communicates with the secondary air line (8b, 11).

4. The acoustic transducer according to Claim 2 or 3,
**characterized in that**
the secondary air line (8) is connected to a secondary air blower (9), whereby the transmission body (25) is connected to the secondary air line (8) on the delivery side of the secondary air blower (9).

5. The acoustic transducer according to Claim 1,
**characterized in that**
the line is an exhaust recirculation line (14) of a system (13) for recirculating exhaust gas from the exhaust system (5) into a fresh air system (4) of the internal combustion engine (1).

6. The acoustic transducer according to Claim 5,
**characterized in that**
an exhaust heat exchanger (5) is arranged in or on the exhaust recirculation line (14) and the transmission body (25c) is connected at its inlet (26c) to the exhaust recirculation line (14) downstream from the exhaust heat exchanger (15).

7. The acoustic transducer according to one of Claims 1 through 6,
**characterized in that**
the transmission body (25) is made of plastic, optionally including a connecting area with the inlet (26).

8. The acoustic transducer according to one of Claims 1 through 7,
**characterized in that**
the transmission body (25) is designed to be airtight.

9. The acoustic transducer according to one of Claims 1 through 8,
**characterized in that**
the transmission body (25) has a chamber (29) designed as a resonator.

## Revendications

1. Transducteur acoustique sur ou dans un véhicule automobile, comportant un corps de transmission creux (25) qui est relié de manière communicante à son entrée (26) à une source sonore (1) du véhicule pour le découplage de bruits aériens et à la sortie (24) duquel des bruits aériens modulés peuvent être rayonnés dans ou vers au moins un espace d'arrivée (21, 23), **caractérisé en ce que** le corps de transmission (25) est raccordé de manière communicante par son entrée (26) à une conduite (8 ; 14), qui est raccordée pour sa part de manière communicante à une installation de gaz d'échappement (5) d'un moteur à combustion interne (1) du véhicule et qui fait partie intégrante d'un dispositif (7 ; 13) servant pour l'introduction de gaz dans l'installation (5) et/ou pour le prélèvement de gaz de l'installation de gaz d'échappement (5).

2. Transducteur acoustique suivant la revendication 1, **caractérisé en ce que** la conduite est une conduite d'air secondaire (8) d'un dispositif (7) pour l'injection d'air secondaire dans l'installation de gaz d'échappement (5).

3. Transducteur acoustique suivant la revendication 2, **caractérisé en ce que** la conduite d'air secondaire (8b, 11) est intégrée au moins en partie dans un bloc-moteur (2) du moteur à combustion interne (1), le corps de transmission (25b) étant raccordé par son entrée (26b) au bloc-moteur (2) et communiquant avec la conduite d'air secondaire (8b, 11).

4. Transducteur acoustique suivant l'une des revendications 2 et 3, **caractérisé en ce que** la conduite d'air secondaire (8) est reliée à une soufflante d'air secondaire (9), le corps de transmission (25) étant raccordé à la conduite d'air secondaire (8) sur le côté refoulement de la soufflante d'air secondaire (9).

5. Transducteur acoustique suivant la revendication 1, **caractérisé en ce que** la conduite est une conduite de recyclage de gaz d'échappement (14) d'un dispositif (13) pour le recyclage de gaz de l'installation de gaz d'échappement (5) dans une installation d'air frais (4) du moteur à combustion interne (1).

6. Transducteur acoustique suivant la revendication 5, **caractérisé en ce qu'**un refroidisseur de gaz d'échappement (15) est disposé sur ou dans la conduite de recyclage de gaz d'échappement (14) et que le corps de transmission (25c) est raccordé par son entrée (26c) à la conduite de recyclage (14) en aval du refroidisseur de gaz d'échappement (15).

7. Transducteur acoustique suivant l'une des revendications 1 à 6, **caractérisé en ce que** le corps de transmission (25) est fabriqué en matière plastique y compris ou non compris une zone de raccordement présentant l'entrée (26).

8. Transducteur acoustique suivant l'une des revendications 1 à 7, **caractérisé en ce que** le corps de transmission (25) est réalisé de manière étanche aux gaz.

9. Transducteur acoustique suivant l'une des revendications 1 à 8, **caractérisé en ce que** le corps de transmission (25) présente un compartiment (29) réalisé sous forme de résonateur.
